# EUROPEAN PATENT APPLICATION

(11) **EP 2 985 075 A1**
(43) Date of publication of application: **17.02.2016**
(21) Application number: 14181148.9
(22) Date of filing: 15.08.2014
(51) Int. Cl.: B01J 20/22, B01J 20/28, C07F 1/00, C04B 38/00

(54) **Shaped body made of a porous material**

(71) Applicant: BASF SE, 67056 Ludwigshafen (DE)
(72) Inventor: WEICKERT, Mathias, 74918 Angelbachtal (DE); ARNOLD, Lena, 68165 Mannheim (DE); HOFMANN, Claus, 68199 Mannheim (DE); MUELLER, Ulrich, 67435 Neustadt (DE)
(74) Representative: Rippel, Hans Christoph

(57) **Abstract**

The invention is related to a shaped body, wherein the shaped body (1, 15) is a solid body made of a porous material comprising metal-organic framework material and having a form of a polyhedron with six lateral faces (3), wherein a length (22) of one edge (5, 17) of the polyhedron differs from a length (22) of any other edge (5, 17) of the polyhedron by 10% or less and wherein all angles between two adjacent edges and adjacent lateral faces are between 85° and 95°. The invention is further related to a packing (25, 29, 33) and use of the shaped body (1, 15).

## Description

The present invention relates to a shaped body, which is made of porous material and has a form of a polyhedron, a packing comprising the shaped body and its use.

Due to their large surface areas porous materials and in particular metal-organic framework (MOF) materials with surface areas of up to 10,000 m²/g, are of interest for applications, especially in gas storage or gas separation. For most applications, it is necessary to process pulverulent materials to compact shaped bodies. These can be handled more conveniently and especially in a safer manner. Shaped bodies allow better exploitation of volumes available in apparatuses or tanks and reduce pressure drops. Prerequisite for a successful use of shaped bodies are preliminarily a high adsorption capacity, adequate thermal and mechanical stability and high abrasion resistance. Even thermal shocks resulting from heat of adsorption released in the course of continuous adsorption/desorption cycles can be sufficient to cause fracture and splintering of the bodies in the case of the related zeolite shaped bodies as described in DE 1905019 A. Mechanical stability is indispensable, particularly for shaped bodies, which are used in vehicle tanks, exposed constantly to agitation. A high mechanical stability of the shaped bodies is important in order to avoid dust development due to abrasion in a moved tank.

A conversion by pressing a powder into the desired shape results in a compression of the porous material so that the density of that material is increased. Generally, this results in a decrease of the surface area of such a shaped material in comparison to the powder. As advantageous effects of porous material are closely linked to the surface area of the material, a surface decrease in the porous material is undesirable with regard to their adsorption, storage or other properties.

For example in case of metal-organic framework containing materials, the decrease of the surface area, e.g. by pressing, during a shape forming step is not only due to a physical reduction of the outer surface, but is also caused by the destruction of spatial structures within the metal-organic framework. This may be explained by the high pore volume resulting in a high fragility of the organic framework structure in comparison to others, like those architectures formed by zeolites.

The stability or hardness of a shaped body correlates with the pressure used to form the shaped body and is also correlated with the form of the resulting shaped body.

US 8,603,225 B2 discloses a porous metal-organic framework material comprising a bidentate organic compound bound by coordination to a metal-ion, the metal ion being Al^{III} and the bidentate organic compound being 2,6-naphthalenedicarboxylate, and shaped bodies made thereof. The shaped bodies are formed into pellets, such as, for example, disc-shaped bodies or hollow articles.

The subject-matter of US 8,313,559 B2 is a porous metal-organic framework containing an at least bidentate organic compound, coordinated to a metal-ion, wherein the metal ion is Al^{III} and the at least bidentate organic compound is 2-aminoterephthalic acid. A shaped body containing this metal-organic framework material is addressed for the storage and separation of gases.

In EP 1 127 618 A1 shaped catalysts for heterogeneously catalyzed reactions are described possessing a form of hollow cylinders or annular tablets, whose end faces are rounded both to an outer edge and to an edge of a central hole. Therefore, these shaped catalysts have no right-angled edges. A support of the catalyst can be based on high-surface-area aluminum oxide.

US 2008/0008877 describes catalytically active and catalytically inactive shaped bodies for catalyst beds. The catalytically inactive shaped bodies have rounded edges on external rubbing surfaces. Edges, which are directed into the interior of the shaped body can be sharp. The inactive shaped bodies possess a form of cylinders, doughnuts, saddlers, trilobes or annular pellets and they are made of graphite, aluminum oxide, steatite, silicon oxide or glass for example.

WO 2009/118408 A1 discloses a solid bed for catalytic hydration of unsaturated fatty acids and fatty acid derivatives. Noble metal catalysts are applied, which are present on a support. The support has a substantially regular shape in deviation from a spherical shape. Supports made of activated carbon are mentioned. A form of the supports can be cubic, cuboid, cylindrical or ellipsoid. A diameter of the support in one direction in space is greater than a diameter in a second direction in space by a factor of at least 1.5.

WO 2012/069481 discloses a shaped catalyst body for the catalytic conversion of organic and inorganic compounds in a fixed-bed reactor. The shaped catalyst body is formed as a cylinder with a cylinder axis and at least one continuous opening running parallel to the cylinder axis. A base of the cylinder has at least four corners. Boundary lines of the catalyst shaped body can be rounded. A geometric body covering the catalyst shaped body is mentioned to be a prism, whose length is longer than its width. The prism can be a cuboid, for example. A specific BET surface of the catalyst shaped body is reported to be between 10 and 300 m²/g. The catalyst shaped body can be completely made of a catalyst component or made of a support material such as, for example, aluminum oxide, silicon oxide, silicon dioxide, aluminum silicate, zirconium dioxide, titanium dioxide or mixtures thereof.

Czerw et al., in Gospodarka Surowcami Mineralnymi (2010), 26(2), pages 85-96, describes cuboid-shaped coal for methane sorption.

Disadvantages of shaped bodies known in the state of the art are a relatively low specific surface area referring to one body and/or referring to a packing formed by the shaped bodies. Further, the pressure drop is comparatively high and a resistance to pressure is limited.

The packing properties, as for example the packing densities in adsorptive gas systems like adsorbed natural gas (ANG) tanks, gas separation or gas scrubbing processes is significant for economic efficiency. For adsorptive systems, an increase in surface area per mass leads to higher storage capacities for the same mass of porous material and an improved separation behavior. Simultaneously, the pressure drop in the system has to be considered as pressure drop is directly related to energy costs. A drawback of a high pressure drop of a packing is that, for example, in applications in storage tanks, the tanking procedure takes more time, as the tanking velocity is reduced. The packing density as well as the pressure drop is directly linked to the form of the shaped bodies.

However, for some applications, a higher pressure drop might also offer the advantage that the surfaces are cleaned by the bypassing gas in cases where coking plays a role.

It is an object of the invention to provide a shaped body, which shows an improved mechanical stability and an increased mass specific surface area as well as an improved packing behavior.

These objects are achieved by a shaped body, wherein the shaped body is a solid body made of a porous material comprising metal-organic framework material and having a form of a polyhedron with six lateral faces, wherein a length of one edge of the polyhedron differs from a length of any other edge of the polyhedron by 10% or less and wherein all angles between two adjacent edges and adjacent lateral faces are between 85° and 95°, preferably between 88° and 92°, most preferably 90°.

As the shaped body is a solid body, the porous material is distributed homogeneously over the whole shaped body. The shaped body is formed by compaction of pulverulent porous material, also called powder of the porous material. No greater notches or holes are present within the outer limitations of the shaped body, apart from void spaces, which are due to the porosity of the porous material. Therefore, also the porosity is homogeneous over the shaped body within the limits of the properties of the pulverulent material the shaped body is made of.

The shaped body has the form of a polyhedron, which is limited by six substantially planar lateral faces, which are preferably rectangles, so as the polyhedron is a cuboid. More preferably, different lateral faces are rectangular or parallel to each other, respectively. An edge of the polyhedron is a line, where two adjacent lateral faces of the polyhedron are joined to each other.

In a preferred embodiment, the length of one edge of the polyhedron differs from the length of any other edge of the polyhedron by 7 % or less, particularly preferably by 5 % or less and most preferably by 3 % or less. In a particularly preferred embodiment, the polyhedron is a cube. In case of a cube, the length of one edge of the cube might still differ from a length of any other edge of the cube in the order of magnitude of an accuracy achievable by a selected production process.

In a preferred embodiment, the shaped body has at least one rounded edge, the rounded edge joining two adjacent lateral faces of the polyhedron, and a circular arc drawn by a curvature of the at least one rounded edge encloses with each of the two lateral faces an angle α, which is between 85° and 95°, preferably between 88° and 92°, most preferably 90°.

In case of a rounded edge, the edge, which is in general a sharp edge, is replaced by an arc which is extended in the direction of the edge. Consequently, two adjacent lateral faces are joined to each other by the circular arc possessing a distinct radius of curvature. The rounded edge is rounded by a curvature, which is directed towards the two adjacent lateral faces. In total, the polyhedron possesses twelve edges. At least one of them is preferably a rounded edge. Rounded edges are, among other things, beneficial for the attrition behavior of the shaped bodies in a packing.

In a preferred embodiment, the radius of curvature of the at least one rounded edge is at least 0.1 mm and at most 10%, preferably at most 5%, of a length of the at least one rounded edge.

In the frame of the invention and in case of a sharp edge, the length of the edge is the shortest distance between two corners, which are connected by the edge. In case of a rounded edge, the length of the edge is the shortest distance between the two points, where prolongations of the edges of each corner intersect.

The presence of rounded edges at the inventive shaped body enables a reduced void space volume in the packing compared to shaped bodies with sharp edges. Simultaneously, the mechanical stability of the shaped body is enhanced and a resulting pressure drop can be limited for some embodiments. For example, a reduction of 3 % in pressure drop can be achieved comparing cubes with rounded and sharp edges for equal packing densities. A further benefit of the inventive shaped body concerns the heat transfer. As for higher packing densities more contact points between the different shaped bodies are established and heat can be transferred more efficiently.

The pressing procedure of the compaction of shaped bodies into the inventive form is less defective for the inner surface of the porous material compared to forms of shaped bodies according to the state of the art. This might be due to a reduced friction between the powder and the inner wall of the die as the surface of the powder exposed to the die wall is minimized by a high volume to surface ratio of the shaped body. The volume to surface ratio is for example higher for a cube compared to a cuboid. A gentle formation of the shaped bodies with respect to the inner surface area of the material is especially crucial for metal-organic framework material as the metal-organic framework material is especially sensible due to its highly porous structure, which provides its unique properties.

The shaped bodies according to the invention provide an increased porosity or inner surface area, respectively, and simultaneously an increased stability in terms of resistance to pressure. Increased mechanical stability of the shaped body can be obtained even though for example semi-organic metal-organic framework, after a shaping step, cannot be calcined at high temperatures as typically required for zeolites, which are generally calcined at approximately 600°C, as described in EP 1 468 731 A1.

In a preferred embodiment, the radius of curvature of the at least one rounded edge is constant. Therefore, the two lateral faces adjacent to the rounded cube are limited by straight lateral lines.

In a preferred embodiment, four edges of the polyhedron, having directions differing from each other by less than 10%, being preferably parallel to each other, are rounded edges (17). In another preferred embodiment, all edges of the polyhedron are rounded edges and the polyhedron does not contain any sharp edges.

In a preferred embodiment, the radius of curvature is equal for all rounded edges of the polyhedron.

In an alternative preferred embodiment, at least two rounded edges of the polyhedron have different radii of curvature. In this embodiment, more than one radius of curvature is applied for rounded edges in the polyhedron. In a particularly preferred embodiment, parallel edges possess the same radius of curvature.

In a preferred embodiment, the length of the one edge of the polyhedron is between 1 mm and 100 mm, preferably between 2 mm and 20 mm, particularly preferably between 3 mm and 8 mm. The length can be determined for example using a sliding caliper.

Due to limitations and tolerances with respect to the production process and tools available, one lateral face or two opposing lateral faces might possess a slightly convex flexion and a circumferential notch or notches directly at and parallel to the edges of the one face or the two opposing lateral faces. A width of the notch or these notches is smaller than 1 mm, preferably smaller than 0.6 mm and typically greater than 0.2 mm. This notch might lead to small deviations between numerical simulations and experimental results.

Besides metal-organic framework material, the porous material can additionally comprise activated carbon, zeolite, activated aluminia, silica gel, open-pore polymer foam or a combination thereof.

High-porous metal-organic framework materials are known in the prior art. They are distinguished, in particular by their porosity and can frequently be supplied to applications comparable to those which are known for inorganic zeolites.

Metal-organic frameworks usually comprise an at least bidentate organic compound, which is coordinated to a metal component and together with the metal component forms the skeleton of the metal-organic framework. The metal-organic framework materials as such are described, for example, in US 5,648,508, EP-A-0 709 253, M. O'Keeffe et al., J. Sol. State Chem., 152 (2000), pages 3-20, H. Li et al., Nature 402 (1999), pages 276 seq., M. Eddaoudi et al. Topics in Catalysis 9 (1999), pages 105-111, B. Chen et al., Science 291 (2001), pages 1021-1023.

The metal component in the framework according to the present invention is preferably selected from groups Ia, IIa, IIIa, IVa to VIIIa and Ib to VIb of the periodic table. Particular preference is given to Mg, Ca, Sr, Ba, Sc, Y, Ln, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, TI, Si, Ge, Sn, Pb, As, Sb and Bi, where Ln represents lanthanides.

Lanthanides are La, Ce, Pr, Nd, Pm, Sm, En, Gd, Tb, Dy, Ho, Er, Tm, Yb.

As it regards the ions of these elements, particularly mentioned are Mg²⁺, Ca²⁺, Sr²⁺, Ba²⁺, Sc³⁺, Y³⁺, Ln³⁺, Ti⁴⁺, Zr⁴⁺, Hf⁴⁺, V⁴⁺, V³⁺, V²⁺, Nb³⁺, Ta³⁺, Cr³⁺, Mo³⁺, W³⁺, Mn³⁺, Mn²⁺, Re³⁺, Re²⁺, Fe³⁺, Fe²⁺, Ru³⁺, Ru²⁺, Os³⁺, Os²⁺, Co³⁺, Co²⁺, Rh²⁺, Rh⁺, Ir²⁺, Ir⁺, Ni²⁺, Ni⁺, Pd²⁺, Pd⁺, Pt²⁺, Pt⁺, Cu²⁺, Cu⁺, Ag⁺, Au⁺, Zn²⁺, Cd²⁺, Hg²⁺, Al³⁺, Ga³⁺, In³⁺, Tl³⁺, Si⁴⁺, Si²⁺, Ge⁴⁺, Ge²⁺, Sn⁴⁺, Sn²⁺, Pb⁴⁺, Pb²⁺, As⁵⁺, As³⁺, As⁺, Sb⁵⁺, Sb³⁺, Sb⁺, Bi⁵⁺, Bi³⁺ and Bi⁺.

Very particular preference is given to Mg, Ca, Al, Y, Sc, Zr, Ti, V, Cr, Mo, Fe, Co, Cu, Ni, Zn, Ln. Greater preference is given to Mg, Zr, Ni, Al, Mo, Y, Sc, Mg, Fe, Cu and Zn. In particular, Mg, Fe, Zr, Sc, Al, Cu and Zn are preferred. Very particular mention may here be made of Mg, Zr, Al, Cu and Zn.

The term "at least bidentate organic compound" refers to an organic compound which comprises at least one functional group which is able to form at least two coordinate bonds to a given metal ion and/or to form one coordinate bond to each of two or more, preferably two, metal atoms.

As functional groups via which the abovementioned coordinate bonds are formed, particular mention may be made by way of example of the following functional groups: -CO₂H, -CS₂H, -NO₂, -B(OH)₂, -SO₃H, -Si(OH)₃, -Ge(OH)₃, -Sn(OH)₃, -Si(SH)₄, -Ge(SH)₄, -Sn(SH)₃, -PO₃H, -AsO₃H, -AsO₄H, -P(SH)₃, -As(SH)₃, -CH(RSH)₂, -C(RSH)₃ -CH(RNH₂)₂ -C(RNH₂)₃, -CH(ROH)₂, -C(ROH)₃, -CH(RCN)₂, -C(RCN)₃, where R is, for example, preferably an alkylene group having 1, 2, 3, 4 or 5 carbon atoms, for example a methylene, ethylene, n-propylene, i-propylene, n-butylene, i-butylene, tert-butylene or n-pentylene group, or an aryl group comprising 1 or 2 aromatic rings, for example 2 C₆ rings, which may optionally be fused and may, independently of one another, be appropriately substituted by at least one substituent in each case and/or may, independently of one another, in each case comprise at least one heteroatom such as N, O and/or S. In likewise preferred embodiments, mention may be made of functional groups in which the abovementioned radical R is not present. In this respect, mention may be made of, inter alia, -CH(SH)₂, -C(SH)₃, -CH(NH₂)₂, -C(NH₂)₃, -CH(OH)₂, -C(OH)₃, -CH(CN)₂ or-C(CN)₃.

However, the functional groups can also be heteroatoms of a heterocycle. Particularly nitrogen atoms may here be mentioned.

The at least two functional groups can in principle be bound to any suitable organic compound as long as it is ensured that the organic compound bearing these functional groups is capable of forming the coordinate bond and of producing the framework.

The organic compounds comprising the at least two functional groups are preferably derived from a saturated or unsaturated aliphatic compound or an aromatic compound or a both aliphat-ic and aromatic compound.

The aliphatic compound or the aliphatic part of the both aliphatic and aromatic compound can be linear and/or branched and/or cyclic, with a plurality of rings per compound also being possible. The aliphatic compound or the aliphatic part of the both aliphatic and aromatic compound more preferably comprises from 1 to 15, more preferably from 1 to 14, more preferably from 1 to 13, more preferably from 1 to 12, more preferably from 1 to 11 and particularly preferably from 1 to 10, carbon atoms, for example 1, 2, 3, 4, 5, 6, 7, 8, 9 or 10 carbon atoms. Particular preference is given here to, inter alia, methane, adamantane, acetylene, ethylene or butadiene.

The aromatic compound or the aromatic part of the both aromatic and aliphatic compound can have one or more rings, for example two, three, four or five rings, with the rings being able to be present separately from one another and/or at least two rings being able to be present in fused form. The aromatic compound or the aromatic part of the both aliphatic and aromatic compound particularly preferably has one, two or three rings, with one or two rings being particularly preferred. Furthermore, each ring of said compound can independently comprise at least one heteroatom, for example N, O, S, B, P, Si, Al, preferably N, O and/or S. The aromatic compound or the aromatic part of the both aromatic and aliphatic compound more preferably comprises one or two C₆ rings, with the two being present either separately from one another or in fused form. In particular, mention may be made of benzene, naphthalene and/or biphenyl and/or bipyridyl and/or pyridyl as aromatic compounds.

The at least bidentate organic compound is more preferably an aliphatic or aromatic, acyclic or cyclic hydrocarbon which has from 1 to 18, preferably from 1 to 10 and in particular 6 carbon atoms and additionally has exclusively 2, 3 or 4 carboxyl groups as functional groups.

The at least one at least bidentate organic compound is preferably derived from a dicarboxylic, tricarboxylic or tetracarboxylic acid.

For example, the at least bidentate organic compound is derived from a dicarboxylic acid such as oxalic acid, succinic acid, tartaric acid, 1,4-butanedicarboxylic acid, 1,4-butenedicarboxylic acid, 4-oxopyran-2,6-dicarboxylic acid, 1,6-hexanedicarboxylic acid, decanedicarboxylic acid, 1,8-heptadecanedicarboxylic acid, 1,9-heptadecanedicarboxlic acid, heptadecanedicarboxylic acid, acetylenedicarboxylic acid, 1,2-benzenedicarboxylic acid, 1,3-benzenedicarboxylic acid, 2,3-pyridinedicarboxylic acid, pyridine-2,3-dicarboxylic acid, 1,3-butadiene-1,4-dicarboxylic acid, 1,4-benzenedicarboxylic acid, p-benzenedicarboxylic acid, imidazole-2,4-dicarboxylic acid, 2-methylquinoline-3,4-dicarboxylic acid, quinoline-2,4-dicarboxylic acid, quinoxaline-2,3-dicarboxylic acid, 6-chloroquinoxaline-2,3-dicarboxylic acid, 4,4'-diaminophenylmethane-3,3'-dicarboxylic acid, quinoline-3,4-dicarboxylic acid, 7-chloro-4-hydroxyquinoline-2,8-dicarboxylic acid, diimidedicarboxylic acid, pyridine-2,6-dicarboxylic acid, 2-methylimidazole-4,5-dicarboxylic acid, thiophene-3,4-dicarboxylic acid, 2-isopropylimidazole-4,5-dicarboxylic acid, tetrahydropyran-4,4-dicarboxylic acid, perylene-3,9-dicarboxylic acid, perylenedicarboxylic acid, Pluriol E 200-dicarboxylic acid, 3,6-dioxaoctanedicarboxylic acid, 3,5-cyclohexadiene-1,2-dicarboxylic acid, octanedicarboxylic acid, pentane-3,3-dicarboxylic acid, 4,4'-diamino-1,1'-biphenyl-3,3'-dicar-boxylic acid, 4,4'-diaminobiphenyl-3,3'-dicarboxylic acid, benzidine-3,3'-dicarboxylic acid, 1,4-bis(phenylamino)benzene-2,5-dicarboxylic acid, 1,1'-binaphthyldicarboxylic acid, 7-chloro-8-methylquinoline-2,3-dicarboxylic acid, 1-anilinoanthraquinone-2,4'-dicarboxylic acid, polytetrahydrofuran 250-dicarboxylic acid, 1,4-bis(carboxymethyl)piperazine-2,3-dicarboxylic acid, 7-chloroquinoline-3,8-dicarboxylic acid, 1-(4-carboxy)phenyl-3-(4-chloro)phenylpyrazoline-4,5-dicarboxylic acid, 1,4,5,6,7,7-hexachloro-5-norbornene-2,3-dicarboxylic acid, phenylindanedicarboxylic acid, 1,3-dibenzyl-2-oxoimidazolidine-4,5-dicarboxylic acid, 1,4-cyclohexanedicarboxylic acid, naphthalene-1,8-dicarboxylic acid, 2-benzoylbenzene-1,3-dicarboxylic acid, 1,3-dibenzyl-2-oxoimidazolidene-4,5-cis-dicarboxylic acid, 2,2'-biquinoline-4,4'-dicarboxylic acid, pyridine-3,4-dicarboxylic acid, 3,6,9-trioxaundecanedicarboxylic acid, hydroxybenzophenonedicarboxylic acid, Pluriol E 300-dicarboxylic acid, Pluriol E 400-dicarboxylic acid, Pluriol E 600-dicarboxylic acid, pyrazole-3,4-dicarboxylic acid, 2,3-pyrazinedicarboxylic acid, 5,6-dimethyl-2,3-pyrazinedicarboxylic acid, 4,4'-diamino(diphenyl ether)diimidedicarboxylic acid, 4,4'- diaminodiphenylmethanediimidedicarboxylic acid, 4,4'-diamino(diphenyl sulfone) diimidedicarboxylic acid, 1,4-naphthalenedicarboxylic acid, 2,6-naphthalenedicarboxylic acid, 1,3-adamantanedicarboxylic acid, 1,8-naphthalenedicarboxylic acid, 2,3-naphthalenedicarboxylic acid, 8-methoxy-2,3-naphthalenedicarboxylic acid, 8-nitro-2,3-naphthalenedicarboxylic acid, 8-sulfo-2,3-naphthalenedicarboxylic acid, anthracene-2,3-dicarboxylic acid, 2',3'-diphenyl-p-terphenyl-4,4"-dicarboxylic acid, (diphenyl ether)-4,4'-dicarboxylic acid, imidazole-4,5-dicarboxylic acid, 4(1 H)-oxothiochromene-2,8-dicarboxylic acid, 5-tert-butyl-1,3-benzenedicarboxylic acid, 7,8-quinolinedicarboxylic acid, 4,5-imidazoledicarboxylic acid, 4-cyclohexene-1,2-dicarboxylic acid, hexatriacontanedicarboxylic acid, tetradecanedicarboxylic acid, 1,7-heptanedicarboxylic acid, 5-hydroxy-1,3-benzenedicarboxylic acid, 2,5-dihydroxy-1,4-dicarboxylic acid, pyrazine-2,3-dicarboxylic acid, furan-2,5-dicarboxylic acid, 1-nonene-6,9-dicarboxylic acid, eicosenedicarbox-ylic acid, 4,4'-dihydroxydiphenylmethane-3,3'-dicarboxylic acid, 1-amino-4-methyl-9,10-dioxo-9,10-dihydroanthracene-2,3-dicarboxylic acid, 2,5-pyridinedicarboxylic acid, cyclohexene-2,3-dicarboxylic acid, 2,9-dichlorofluorubin-4,11-dicarboxylic acid, 7-chloro-3-methylquinoline-6,8-dicarboxylic acid, 2,4-dichlorbenzophenone-2',5'-dicarboxylic acid, 1,3-benzenedicarboxylic acid, 2,6-pyridinedicarboxylic acid, 1-methylpyrrole-3,4-dicarboxylic acid, 1-benzyl-1 H-pyrrole-3,4-dicarboxylic acid, anthraquinone-1,5-dicarboxylic acid, 3,5-pyrazoledicarboxylic acid, 2-nitrobenzene-1,4-dicarboxylic acid, heptane-1,7-dicarboxylic acid, cyclobutane-1,1-dicarboxylic acid 1,14-tetradecanedicarboxylic acid, 5,6-dehydronorbornane-2,3-dicarboxylic acid, 5-ethyl-2,3-pyridinedicarboxylic acid or camphordicarboxylic acid.

Furthermore, the at least bidentate organic compound is more preferably one of the dicarboxylic acids mentioned by way of example above as such.

The at least bidentate organic compound can, for example, be derived from a tricarboxylic acid such as 2-hydroxy-1,2,3-propanetricarboxylic acid, 7-chloro-2,3,8-quinolinetricarboxylic acid, 1,2,3-benzenetricarboxylic acid, 1,2,4-benzenetricarboxylic acid, 1,2,4-butanetricarboxylic acid, 2-phosphono-1,2,4-butanetricarboxylic acid, 1,3,5-benzenetricarboxylic acid, 1-hydroxy-1,2,3-propanetricarboxylic acid, 4,5-dihydro-4,5-dioxo-1H-pyrrolo[2,3-F]quinoline-2,7,9-tricarboxylic acid, 5-acetyl-3-amino-6-methylbenzene-1,2,4-tricarboxylic acid, 3-amino-5-benzoyl-6-methyl-benzene-1,2,4-tricarboxylic acid, 1,2,3-propanetricarboxylic acid or aurintricarboxylic acid.

Furthermore, the at least bidentate organic compound is more preferably one of the tricarboxylic acids mentioned by way of example above as such.

Examples of an at least bidentate organic compound derived from a tetracarboxylic acid are 1,1-dioxidoperylo[1,12-BCD]thiophene-3,4,9,10-tetracarboxylic acid, perylenetetracarboxylic acids such as perylene-3,4,9,10-tetracarboxylic acid or (perylene-1,12-sulfone)-3,4,9,10-tetracarboxylic acid, butanetetracarboxylic acids such as 1,2,3,4-butanetetracarboxylic acid or meso-1,2,3,4-butanetetracarboxylic acid, decane-2,4,6,8-tetracarboxylic acid, 1,4,7,10,13,16-hexaoxacyclooctadecane-2,3,11,12-tetracarboxylic acid, 1,2,4,5-benzenetetracarboxylic acid, 1,2,11,12-dodecanetetracarboxylic acid, 1,2,5,6-hexanetetracarboxylic acid, 1,2,7,8-octane-tetracarboxylic acid, 1,4,5,8-naphthalenetetracarboxylic acid, 1,2,9,10-decanetetracarboxylic acid, benzophenonetetracarboxylic acid, 3,3',4,4'-benzophenonetetracarboxylic acid, tetrahydrofurantetracarboxylic acid or cyclopentanetetracarboxylic acids such as cyclopentane-1,2,3,4-tetracarboxylic acid.

Furthermore, the at least bidentate organic compound is more preferably one of the tetracarboxylic acids mentioned by way of example above as such.

Preferred heterocycles as at least bidentate organic compound in which a coordinate bond is formed via the ring heteroatoms are the following substituted or unsubstituted ring systems:

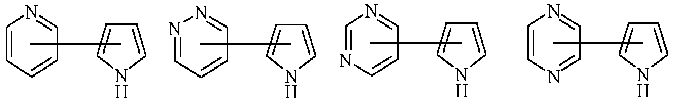

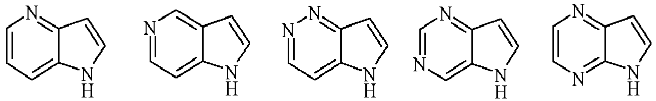

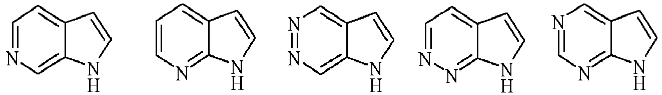

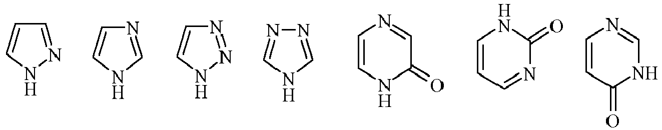

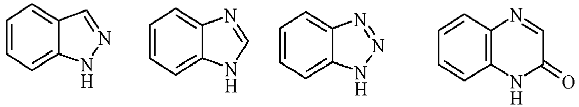

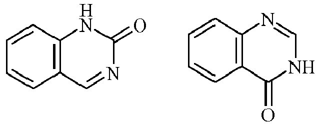

Very particular preference is given to using optionally at least monosubstituted aromatic dicarboxylic, tricarboxylic or tetracarboxylic acids which can have one, two, three, four or more rings, with each of the rings being able to comprises at least one heteroatom and two or more rings being able to comprise identical or different heteroatoms. For example preference is given to one-ring dicarboxylic acids, one-ring tricarboxylic acids, one-ring tetracarboxylic acids, two-ring dicarboxylic acids, two-ring tricarboxylic acids, two-ring tetracarboxylic acids, three-ring dicarboxylic acids, three-ring tricarboxylic acids, three-ring tetracarboxylic acids, four-ring dicarboxylic acids, four-ring tricarboxylic acids and/or four-ring tetracarboxylic acids. Suitable heteroatoms are, for example, N, O, S, B, P, and preferred heteroatoms are N, S and/or O. Suitable substituents here are, inter alia, -OH, a nitro group, an amino group or an alkyl or alkoxy group.

Particularly preferred at least bidentate organic compounds are imidazolates such as 2-methyl-imidazolate, acetylenedicarboxylic acid (ADC), camphordicarboxylic acid, fumaric acid, succinic acid, benzenedicarboxylic acids such as phthalic acid, isophthalic acid, terephthalic acid (BDC), aminoterephthalic acid, triethylenediamine (TEDA), methylglycinediacetic acid (MGDA), naphthalenedicarboxylic acids (NDC), biphenyldicarboxylic acids such as 4,4'-biphenyldicarboxylic acid (BPDC), pyrazinedicarboxylic acids such as 2,5-pyrazinedicarboxylic acid, bipyridinedicarboxylic acids such as 2,2'-bipyridinedicarboxylic acids such as 2,2'-bipyridine-5,5'-dicarboxylic acid, benzenetricarboxylic acids such as 1,2,3-benzenetricarboxylic ac, 1,2,4-benzenetri carboxylic acid or 1,3,5-benzenetricarboxylic acid (BTC), benzenetetracarboxylic acid, adamantanetetracarboxylic acid (ATC), adamantanedibenzoate (ADB), benzenetribenzoate (BTB), methanetetrabenzoate (MTB), adamantanetetrabenzoate or dihydroxyterephthalic acids such as 2,5-dihydroxyterephthalic acid (DHBDC), tetrahydropyrene-2,7-dicarboxylic acid (HPDC), biphenyltetracarboxylic acid (BPTC), 1,3-bis(4-pyridyl)propane (BPP).

Very particular preference is given to using, inter alia, 2-methylimidazole, 2-ethylimidazole, phthalic acid, isophthalic acid, terephthalic acid, 2,6-naphthalenedicarboxylic acid, 1,4-naphthalenedicarboxylic acid, 1,5-naphthalenedicarboxylic acid, 1,2,3-benzenetricarboxylic acid, 1,2,4-benzenetricarboxylic acid, 1,3,5-benzenetricarboxylic acid, 1,2,4,5-benzenetetracarboxylic acid, aminoBDC, TEDA, fumaric acid, biphenyldicarboxylate, 1,5- and 2,6-naphthalenedicarboxylic acid, tert-butylisophthalic acid, dihydroxybenzoic acid, BTB, HPDC, BPTC, BPP, fumaric acid.

Apart from these at least bidentate organic compounds, the metal-organic framework can also comprise one or more monodentate ligands and/or one or more at least bidentate ligands which are not derived from a dicarboxylic, tricarboxlic or tetracarboxylic acid.

For the purposes of the present invention, the term "derived" means that the at least one at least bidentate organic compound is present in partially or fully deprotonated form. Furthermore, the term "derived" means that the at least one at least bidentate organic compound can have further substituents. Thus, a dicarboxylic or polycarboxylic acid can have not only the carboxylic acid function but also one or more independent substituents such as amino, hydroxyl, methoxy, halogen or methyl groups. Preference is given to no further substituent being present. For the purposes of the present invention, the term "derived" also means that the carboxylic acid function can be present as a sulfur analogue. Sulfur analogues are -C(=O)SH and its tautomer and -C(S)SH.

Even more preferably, the at least one at least bidentate organic compound is selected from the group consisting of fumaric acid (FUM), terephthalic acid (BDC), benzene tricarboxylate (BTC, also known as trimesic acid), 2-methylimidazole and benzene tribenzoate (BTB) and/or the at least one metal ion is an ion selected from the group of metals consisting of Mg, Zr, Zn, Cu and Al (more preferably Zn, Cu and Al).

The term "and/or" combining two options means the first option or the second option or both, the first and the second option.

Examples of particularly suitable metal-organic framework materials for the shaped body according to the invention are copper-1,3,5-BTC, aluminum fumarate, zinc benzene tribenzoate and zinc 2-methylimidazolate.

The pore sizes of the metal-organic framework can be adjusted by selecting suitable organic ligands and/or bidendate compounds, also called linkers. Generally, the larger the linker, the larger the pore size. Any pore size that is still supported by a metal-organic framework in the absence of a host and at temperatures of at least 200 °C is conceivable. Pore sizes ranging from 0.2 nm to 30 nm are preferred, with pore sizes ranging from 0.3 nm to 3 nm being particularly preferred.

Metal organic framework comprises pores, in particular micropores or mesopores. Micropores are defined as pores having a diameter of 2 nm or less and mesopores are defined by a diameter in the range from 2 nm to 50 nm (Pure & Appl. Chem. 57 (1985) 603-619). The presence of micropores and/or mesopores can be checked by means of sorption measurements which determine the uptake capacity of the metal organic frameworks for nitrogen at 77 Kelvin (Langmuir method) in accordance with DIN 66131:1993-07 and/or DIN 66134:1998-2.

WO-A-03/102000 describes in general terms the conversion of metal-organic framework powder into shaped bodies like pellets with a resistance to pressure in the range from 2 N to 100 N. In an example pellets which have a resistance to pressure of 10 N are made by means of eccentric press.

To form shaped bodies several routes exist, among them molding the pulverulent material alone or in combination with a binder and/or other components into a shaped body, for example by pelletizing. In the context of the present invention, the term "molding" refers to any process known to the expert in the field by which a porous material, i.e. any powder, powdery substance, array of crystallites etc., can be formed into a shaped body that is stable under the conditions of its intended use.

While the step of molding into a shaped body is mandatory, the following steps are optional. The molding may be preceded by a step of mixing. The molding may be preceded by a step of preparing a paste-like mass or a fluid containing the porous material, for example by adding solvents, binders or other additional substances. The molding may be followed by a step of finishing, in particular a step of drying.

The step of molding, shaping or forming may be achieved by any method known to a person skilled in the art to achieve agglomeration of a powder, a suspension or a paste-like mass. Such methods are described, for example, in Ullmann's Enzyklopädie der Technischen Chemie, 4th Edition, Vol. 2, p. 313 et seq., 1972, whose respective content is incorporated into the present application by reference.

In general, the following main pathways can be discerned: briquetting or tableting, i.e. mechanical pressing of the powdery material, with or without binders and/or other additives, granulating (pelletizing), i.e. compacting of moistened powdery materials by subjecting it to rotating movements, and sintering, i.e. subjecting the material to be compacted to a thermal treatment. The latter is limited for the material according to the invention due to the limited temperature stability of the organic materials.

Specifically, the molding step according to the invention is preferably performed by using at least one method selected from the following group: briquetting by piston presses, briquetting by roller pressing, binderless briquetting, briquetting with binders, pelletizing, compounding, melting, extruding, co-extruding, spinning, deposition, foaming, spray drying, coating, granulating, in particular spray granulating or granulating according to any process known within the processing of plastics or any combination of at least two of the aforementioned methods. Briquetting and/or pelletizing are in particular preferred.

A mixture comprising the porous material can be prepared in a mixer such as intensive mixers, rotary plates, marumerizers, and any other equipment known by a person skilled in the art. Preferred mixers are selected from the group consisting of intensive mixers, rotary plates, ball formers and marumerizers.

The molding can be carried out at elevated temperatures, for example in the range from room temperature to 300°C, and/or at superatmospheric pressure, for example in the range from atmospheric pressure to a few hundred bar, and/or in a protective gas atmosphere, for example in the presence of at least one noble gas, nitrogen, dry air with a relative humidity of preferably less than 45% or a mixture of two or more thereof.

The shaped bodies can be formed for example in an excenter press. A compacting force is preferably between 1 kN and 3000 kN, more preferably between 1 kN and 300 kN and most preferably between 10 kN and 150 kN. For higher forces the permeability of the shaped bodies is unnecessarily reduced and for smaller forces no stable shaped bodies are obtained. The smaller the shaped body, the higher the applied force can be chosen.

The step of molding can be performed in the presence of binders, lubricants and/or other additional substances that stabilize the materials to be agglomerated. As to at least one optional binder, any material known to an expert to promote adhesion between the particles to be molded together can be employed. A binder, an organic viscosity-enhancing compound and/or a liquid for converting the material into a paste can be added to the pulverulent material, with the mixture being subsequently compacted.

Suitably binders, lubricants or additives are, for example, aluminum oxide or binders comprising aluminum oxide, as described, for example, in WO 94/29408, silicon dioxide, as described, for example, in EP 0 592 050 A1, mixtures of silicon dioxide and aluminum oxide, as described, for example, in WO 94/13584, clay minerals as described, for example, in JP 03-037156 A, for example montmorillonite, kaolin, bentonite, hallosite, dickite, nacrite and anauxite, alkoxysilanes as described, for example, in EP 0 102 544 B1, for example tetraalkoxysilanes such as tetramethoxysilane, tetraethoxysilane, tetrapropoxysilane, tetrabutoxysilane, or, for example, trialkoxysilanes such as trimethoxysilane, triethoxysilane, tripropoxysilane, tributoxysilane, alkoxytitanates, for example tetraalkoxytitanates such as tetramethoxytitanate, tetraethoxytitanate, tetrapropoxytitanate, tributoxytitanate, or, for example, trialkoxytitanates, such as trimethoxytitanate, triethoxytitanate, tripropoxytitanate, tributoxytitanate, alkoxyzirconates, for example tetraalkoxyzirconates such as tetramethoxyzirconate, tetraethoxyzirconate, tetrapropoxyzirconate, tetrabutoxyzirconate, or, for example, trialkoxyzirconates such as trimethoxyzirconate, tri-ethoxyzirconate, tripropoxyzirconate, tributoxyzirconate, silica sols, amphiphilic substances, copper, graphite, ascorbyl palmitate, expanded natural graphite (ENG), silicon carbide, polysaccharides, fatty acids, alcyl silicon resins, metal-organic framework materials, where the metal-organic framework has a layer composition, or mixtures thereof.

Suitable binders are for example commercially available under trade names like Pural® SB (aluminum oxide), Ludox® AS 40 (colloidal silica), or Silres® MSE100 (methyl and methoxy groups containing polysiloxane).

Preferred binder, lubricants or additives are graphite, stearic acid, magnesium stearate, copper platelets, silicon carbide, expanded natural graphite (ENG), ascorbyl palmitate, polysaccharides, for example commercially available as Zusoplast PS1, aluminium oxide, for example commercially available as Pural SB or mixtures thereof.

In a preferred embodiment, the shaped body comprises at least 1 % by weight of a binder and/or lubricant, which are selected from the group consisting of inorganic oxide, clay, concrete and graphite. Preferably the shaped body comprises less than 10% by weight of a binder and/or lubricant and most preferably, the shaped body comprises between 1,5% and 5% by weight of a binder and/or lubricant and most preferably between 2.5% and 3.5% . Alternatively, no binder or lubricant is used.

Further additives which can be used are, inter alia, amines or amine derivatives such as tetraalkylammonium compounds or amino alcohols and carbonate-comprising compounds, e.g. calcium carbonate. Such further additives are described, for instance, in EP 0 389 041 A1, EP 0 200 260 A1 or WO 95/19222. Further, pore-forming agents such as organic polymers, preferably methylcellulose, polyethylene oxide or mixtures thereof can be added. Preferably, the shaped body comprises between 1 % and 50% by weight of further additives and more preferably between 3% and 20% by weight. Alternatively, no further additives are used.

The shaped body obtained after molding can be subjected to a drying step which is generally carried out at a temperature in the range from 25 to 500°C, preferably in the range from 50 to 250°C and particularly preferably in the range from 80 to 150°C. It is likewise possible to carry out drying under reduced pressure or under a protective gas atmosphere or by spray drying.

Preferably, compounds added as additives are at least partly removed from the shaped body during this drying process.

A powder or pulverulent material, the shaped bodies can be made of, has a fine powdery grain size and may contain or consist of crystallites (small crystals). According to the present invention, the term powder or pulverulent is used for all forms described above as well as mixtures thereof. The maximum grain size of the powder is preferably less than 0.2 mm for each direction.

Preferably, the specific surface area, determined in accordance with the Langmuir model (DIN 66131:1993-07 and/or DIN 66134:1998-2) for the pulverulent material is preferably at least 1000 m²/g, more preferably at least 1200 m²/g, more preferably at least 1400 m²/g, still more preferably at least 1600 m²/g, still more preferably at least 1800 m²/g and particularly preferably at least 1950 m²/g.

Depending on the porous material shaped bodies can have a lower specific surface area, preferably, however, at least 500 m²/g, more preferably at least 600 m²/g, still more preferably at least 700 m²/g, in particular preferably at least 800 m²/g.

In a particularly preferred embodiment, the shaped body has a specific surface area per mass of at least 1000 m²/g determined according to Langmuir by N₂ adsorption at 77 K, preferably between 1200 m²/g and 5000 m²/g, particularly preferably between 1500 m²/g and 4500 m²/g, depending on the selection of the porous material, especially depending on the selection of a metal-organic framework material.

The result of the above-mentioned surface area measurements are usually expressed by a surface area per weight, for example m²/g. The multiplication with density or tamped density results in a surface area per volume, for example m²/mL.

For the powder, the density determination is preferably based on the measurement of its weight per liter (also called liter weight or bulk density). Here, a container of a known volume is filled with a powder and the weight of the powder is determined.

Another suitable basis is the tapped or tamped density, where the above-mentioned container is subject to shaking. Therefore, the value of the tapped density is higher than that for the liter weight.

The invention further relates to a packing comprising the shaped body according to the invention and preferably a packing comprising the shaped body according to the invention, wherein a radial orientation of one shaped body in the packing differs by less than 20°, preferably less than 10° and more preferably less than 3° from the radial orientation of any other shaped body in the packing. In a most preferred embodiment the shaped bodies are not poured but rather stacked to form the packing. A stacking is applicable in cases, where the inner surface of the shaped body is more relevant for the application, as for example for storage applications, than the accessibility of the outer surface of the shaped body, as for example for applications in chemical catalysis. The stacking is recommendable when a ratio of a permeability and a hydraulic diameter of the shaped bodies is higher than 0.3*10⁻¹⁵ m.

In a preferred embodiment, a ratio of the surface area per volume of the shaped body to the surface area per volume of the powder is greater than 1.6, preferably greater than 2.0. A high ratio of the surface area per volume of the shaped body to the surface area per volume of the powder is especially important for applications where the maximum volume is predetermined by a surrounding of the metal-organic framework containing shaped bodies, for example the volume of a reaction vessel for catalytic reactions or a separation column for chromatography or a tank for storage purposes.

In an embodiment, all lateral faces of the polyhedron are planar. No recesses or holes are preferably provided in any lateral faces in order to obtain high densities with a minimized void space.

In a preferred embodiment, the shaped body has a resistance to pressure in the range from 2 N to 1000 N, preferably between 20 N and 500 N, particularly preferably between 40 N and 250 N.

The resistance to pressure, also called crush strength or side crush strength, is defined within the meaning of the present invention as resistance to lateral pressure and can be measured with a hardness grading device by Zwick. The resistance to pressure was measured on an apparatus from Zwick (model: BZ2.5/TS1S) according to DIN EN ISO 9001:2008.

The invention further relates to the use of the shaped bodies according to the invention for sorption of at least one liquid or gas, for storage of at least one liquid or gas, for separation, as catalyst, as support, as desiccant, as ion exchanger material, as molecular sieve, as material for chromatography, as material for selective release and/or uptaking of molecules, as material for molecular recognition, as material for nanotubes and/or as material for nano-reactors. In a preferred embodiment, the shaped body according to the invention is used for the storage of gas, which is selected from the group consisting of natural gas, shale gas, town gas, methane, ethane, butane, hydrogen, propane, propene, ethylene, carbon dioxide, water and combinations thereof. In a particularly preferred embodiment the shaped body is used for the storage of a gas comprising methane and/or hydrogen.

Further gases storable by means of the shaped bodies are acetylene, nitrogen oxides, oxygen, sulfur oxides, halogens, halogenated hydrocarbons, NF₃, SF₆, ammonia, hydrogen sulfide, ammonia, formaldehyde, noble gases, in particular helium, neon, argon, krypton and xenon.

For the purposes of the present invention, the terms "gas" and "liquid" are used in the interests of simplicity, but gas mixtures and liquid mixtures or liquid solutions are likewise encompassed by the term "gas" or "liquid".

If the shaped bodies of the invention are used for storage, this is preferably carried out in a temperature range from -200°C to +80°C. A temperature range from -80°C to +80°C is more preferred. A preferred pressure range is from 1 bar to 1000 bar (absolute), more preferably from 1 bar to 700 bar, particularly preferably from 1 bar to 300 bar and most preferably from 2 bar to 250 bar.

Processes for storage by means of shaped bodies according to the present invention can be used as for example known for shaped bodies of metal-organic frameworks. In general, these are described in WO-A 2005/003622, WO-A 2003/064030, WO-A 2005/049484, WO-A 2006/089908 and DE-A 10 2005 012 087.

Processes for separation or purification by means of shaped bodies according to the present invention can be used as for example known for shaped bodies of metal-organic frameworks. In general these are described in EP-A 1 674 555, DE-A 10 2005 000938 and DE-A 10 2005 022 844. A gas which is preferably separated off is carbon dioxide, in particular from a gas mixture which further comprises carbon monoxide. Other gases or volatile components which are preferably separated off are sulfur-based impurities in natural gas or shale gas like hydrogen sulfide or carbonyl sulfide.

However, the shaped body can also be used for taking up a liquid for its storage, separation, controlled release and/or chemical reaction. Examples of such a liquid are disinfectants, inorganic or organic solvents, fuels, in particular gasoline or diesel, hydraulic liquid, coolant liquid, brake fluid or oil, in particular machine oil. In addition, the liquid can be halogenated aliphatic or aromatic, cyclic or acyclic hydrocarbons or mixtures thereof. In particular, the liquid can be acetone, acetonitrile, aniline, anisole, benzene, benzonitrile, bromobenzene, butanol, tert-butanol, quinoline, chlorobenzene, chloroform, cyclohexane, diethylene glycol, diethyl ether, dimethylacetamide, dimethylformamide, dimethylsulfoxide, dioxane, glacial acetic acid, acetic anhydride, ethyl acetate, ethanol, ethylene carbonate, ethylene dichloride, ethylene glycol, ethylene glycol dimethyl ether, formamide, hexane, isopropanol, methanol, methoxypropanol, 3-methyl-1-butanol, methylene chloride, methyl ethyl ketone, N-methylformamide, N-methylpyrrolidone, nitrobenzene, nitromethane, piperidine, propanol, propylene carbonate, pyrridine, carbon disulfide, sulfolane, tetrachloroethene, carbon tetrachloride, tetrahydrofuran, toluene, 1,1,1-trichloro-ethane, trichloroethylene, triethylamine, triethylene glycol, triglyme, water or mixtures thereof.

In addition, the shaped body can also be used for taking up an odor substance. Preferably, the odor substance is a volatile organic or inorganic compound which comprises at least one of the elements nitrogen, phosphorus, oxygen, sulfur, fluorine, chlorine, bromine or iodine or is an unsaturated or aromatic hydrocarbon or a saturated or unsaturated aldehyde or a ketone. More preferred elements are nitrogen, oxygen, phosphorus, sulfur, chlorine, bromine; in particular preference is given to nitrogen, oxygen, phosphorus and sulfur.

In the context of the present invention, a volatile odor substance preferably has a boiling point or boiling range of below 300°C. More preferably, the odor substance is a readily volatile compound or mixture. In particular preferably, the odor substance has a boiling point or boiling range of below 250°C, more preferably below 230°C, in particular preferably below 200°C.

Examples in which a chemical reaction can take place in the presence of metal-organic framework material are the alkoxylation of monools and also of polyols. The procedure of such alkoxylations is described in WO-A 03/035717 and also WO-A 2005/03069. Likewise, the shaped body can be used for epoxidation and also for production of polyalkylene carbonates and hydrogen peroxide. Such reactions are described in WO-A 03/101975, WO-A 2004/037895 and also US-A 2004/081611.

Particular preference is given to the use in vehicles. The term 'vehicle' includes but shall not be limited to cars, trucks, ships, airplanes, motorcycles, threewheelers and the like.

Applications in adsorptive gas systems as adsorbed natural gas (ANG) tanks, gas separation and gas scrubbing are particularly preferred.

### Brief description of the drawings

The present invention is described in more detail at hand of the accompanying drawings, in which:
- Figure 1: shows a cylindrical shaped body of the state of the art;
- Figure 2: shows a cuboid shaped body according to the invention;
- Figure 3: shows a shaped body according to the invention comprising rounded edges;
- Figure 4: shows packings of shaped bodies according to the invention, cylindrical shaped bodies of the state of the art and cubic shaped bodies according to the invention, respectively;
- Figure 5: shows a further embodiment of a packing comprising shaped bodies according to the invention and
- Figure 6: shows a further embodiment of a shaped body according to the invention comprising rounded edges.

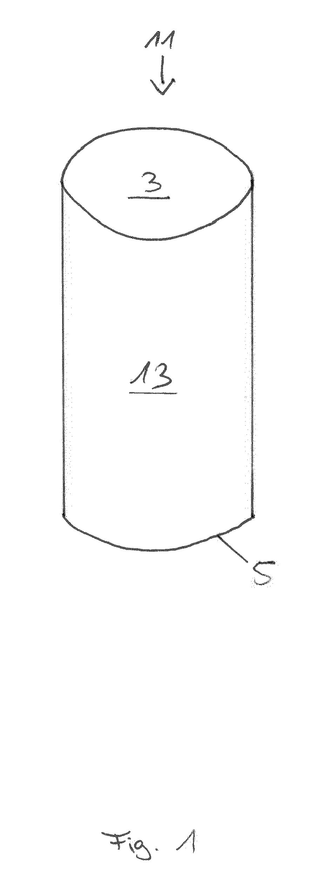

Figure 1 shows a cylindrical shaped body 11 of the state of the art, which possesses two planar lateral faces 3 in form of a circle. The two planar and circular lateral faces 3 are joined to each other by a rounded girthed area 13. The edges of the cylindrical shaped body 11 are sharp edges 5.

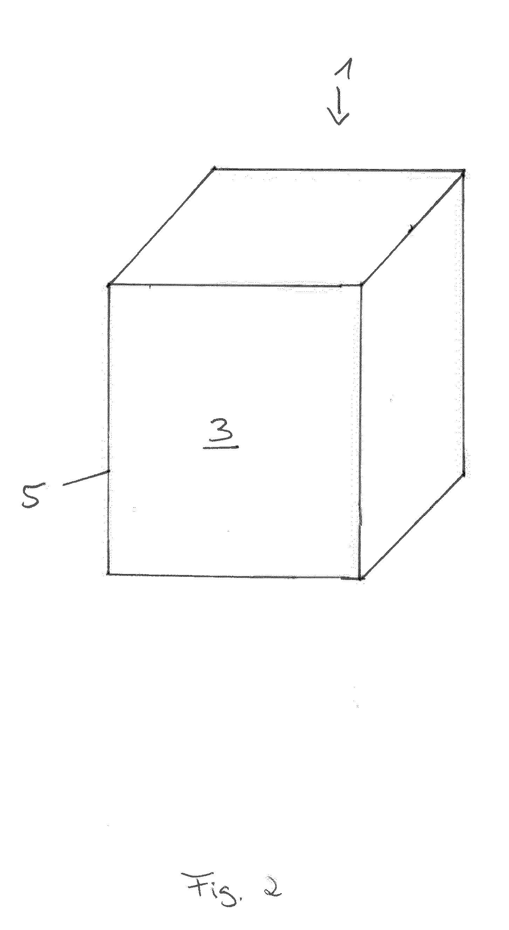

Figure 2 shows a cuboid shaped body 1 according to the invention, which possesses six planar lateral faces 3 and twelve sharp edges 5. Two adjacent lateral faces 3 form a sharp edge 5, which joins the two lateral faces 3 to each other.

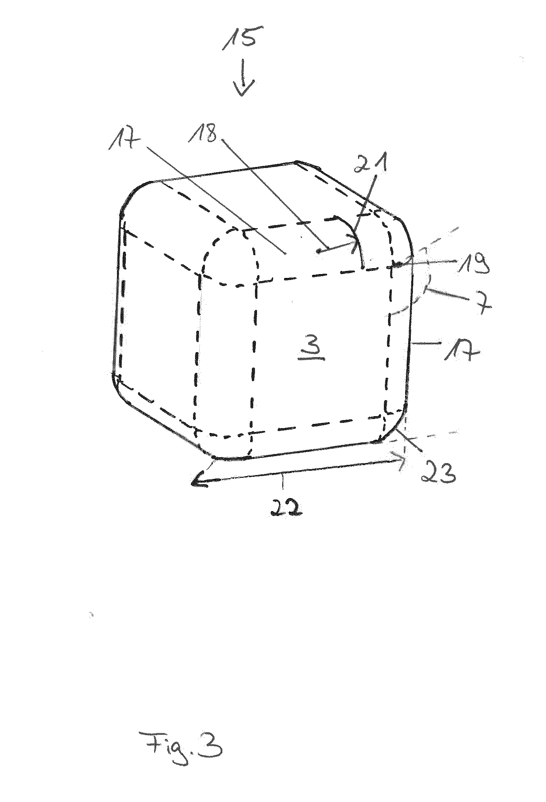

Figure 3 shows an inventive shaped body 15 possessing six lateral faces 3, which are planar, and twelve rounded edges 17. At least two of the rounded edges 17 possess different radii of curvature 18. A first radius of curvature 18 of a circular arc with the first radius of curvature 19 is smaller than a second radius of curvature 18 of a circular arc with the second radius of curva-ture 21. In this figure, all vertically arranged rounded edges 17 possess the same circular arc with the first radius of curvature 19 and all horizontally arranged rounded edges 17 possess the same circular arc with the second radius of curvature 21. As all edges striking each other in all of the eight corners present in the inventive shaped body 15 are rounded edges 17, the eight corners 23 also are rounded corners. A dimension of the shaped body 15 is given by a length 22. The length 22 is the shortest distance between the two points, where prolongations of the edges of each corner 23 intersect.

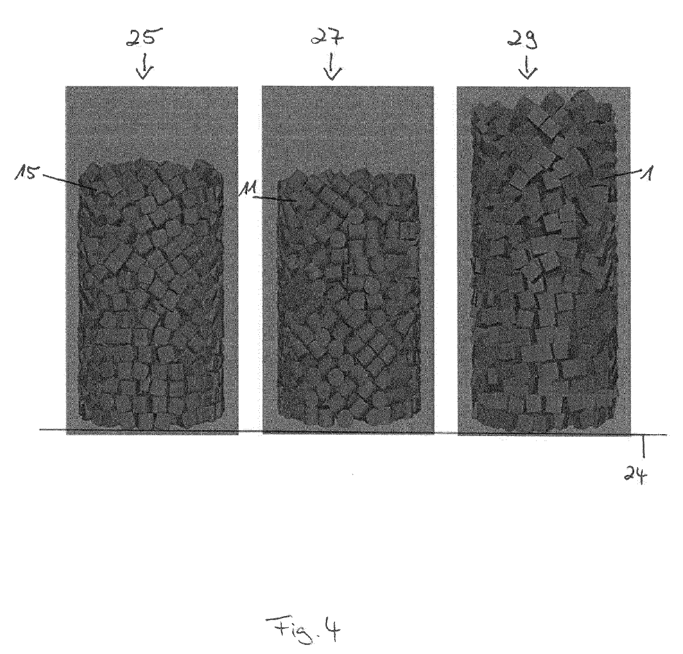

Figure 4 shows a first packing 25 comprising inventive shaped bodies 15, a second packing 27 comprising cylindrical shaped bodies 11 of the state of the art and a third packing 29 comprising cuboid shaped bodies 1 according to the invention. For all three packings 25, 27, 29, the number of shaped bodies 1, 11, 15 comprised therein is equal and all shown shaped bodies 1, 11, 15 are made of the same porous material. Further, the length 22 of the different shaped bodies 1, 11, 15 in any direction in space is equal. The length 22 of the shaped bodies in the packings 25, 27 and 29, as well as the diameter of the cylindrical shaped bodies 11, was 3 mm, resulting in a void space volume, obtained by numerical simulation, of 0.27, 0.35 and 0.38, respectively. The packing 25 comprising the shaped body 15 shows the smallest void space volume in comparison with the other two packings 27, 29. The void space volume is also called external porosity. Packing 29 showed the longest extension in axial direction of the packing, referring to a reference line 24. The radius of curvature 18 is optimized according to packing density, density of the shaped body, adsorption capacity and mechanical stability. The packing 25 comprising the shaped bodies 15 provided a packing density, which is more than 10 % higher compared to the packing 29 comprising cuboid shaped bodies 1.

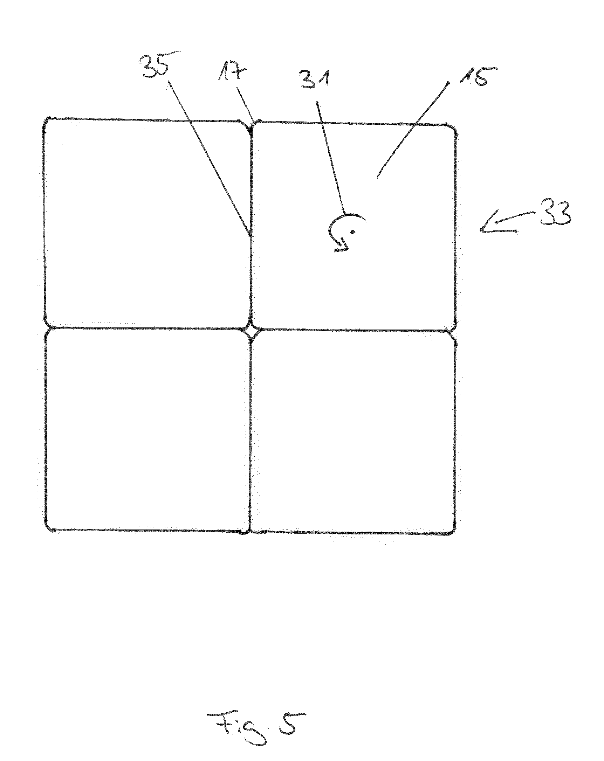

Figure 5 shows a further embodiment of a packing comprising shaped bodies 15 according to the invention. A cross-section of four shaped bodies 15 comprising rounded edges 17 is represented. The four shaped bodies 15 are part of a fourth packing 33. The fourth packing 33 can also be described as stacking. A radial orientation 31 and more general, a spatial orientation, is the same for all shaped bodies 15 in the fourth packing 33. Here, one shaped body 15 possesses edges 5, 17, which are parallel to edges 5, 17 of any other shaped body 15 comprised in the fourth packing 33. As a consequence, the void space between the different shaped bodies 15 is minimized and due to a larger contact area 35 between the shaped bodies 15 a heat transfer in the fourth packing 33 between the shaped bodies 15 is improved. Here all edges 5, 17 are rounded edges 17.

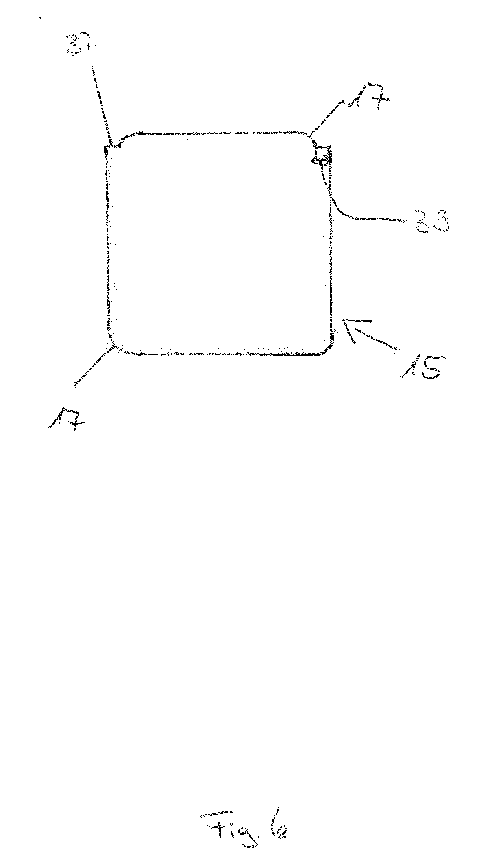

Figure 6 shows a cross-sectional view of a further embodiment of the shaped body 15 according to the invention comprising rounded edges 17. One end of the shaped body 15 comprises a circumferential notch 37 with a width 39 of 0.5 mm due to production tolerances.

### Examples and comparative examples

Void spaces were calculated by a discrete element method, the theoretical study was supplemented by experimental data.

Shaped bodies were prepared from three different metal-organic frameworks, namely Basolite™ Z377, Basolite™ C300 and Basolite™ A520. Basolite™ Z377, in literature also referred to as metal-organic framework type MOF 177, is based on zinc-benzene-tribenzoate. The specific surface area of a Basolite™ Z377, measured by porosimetry or nitrogen adsorption, is typically in the range from 3500 m²/g to 5200 m²/g. Basolite™ C300, in literature also referred to as HKUST-1, is based on copper benzene-1,3,5-tricarboxylate and, for example, commercially available from Sigma Aldrich under the trade name Basolite™ C300. The specific surface area of a Basolite™ C300, measured by porosimetry or nitrogen adsorption, is typically in the range from 1200 m²/g to 2500 m²/g. Basolite™ A520 is based on aluminium-fumarate and typically possesses a specific surface area in the range from 950 m²/g to 1300 m²/g.

The metal-organic framework materials were compacted by an excenter press SP300 No 125 by Kilian Tableting GmbH using special design tooling equipment by Notter GmbH. For all examples and comparative examples, a single mold equipment was applied. The powder to be compressed comprised approximately 3 % by weight of graphite. For rounded cubes a tooling equipment with two different radii of curvature R1 and R2 was applied, wherein R1 was applied for the vertical edges and R2 was applied for all horizontal edges.

### Comparative example 1

194 g of Basolite™ Z377, mixed with 6 g graphite, were compacted to cylinders with a diameter and length of 3 mm, respectively. The atmospheric humidity was less than 15%. The die fill was 8.1 mm and the submersion depth was 5.4 mm.

### Example 1

1200 g of Basolite™ Z377, mixed with 37.1 g graphite, were compacted in a 6 mm cube tooling equipment. The atmospheric humidity was less than 40%. The die fill was 12 mm and the submersion depth was 5.9 mm.

### Example 2

388 g of Basolite™ Z377, mixed with 12 g graphite, were compacted in a 4 mm rounded cube tooling equipment with radii of curvature R1 = 1 mm and R2 = 0.5 mm. The atmospheric humidity was less than 25%. The die fill was 8.4 mm and the submersion depth was 5.7 mm.

### Example 3

388 g of Basolite™ Z377, mixed with 12 g graphite, were compacted in a 6 mm rounded cube tooling equipment with the radii of curvature R1 = 1.5 mm and R2 = 0.8 mm. The atmospheric humidity was less than 15%. The die fill was 12.5 mm and the submersion depth was 8.3 mm.

### Comparative example 2

1746 g of Basolite™ C300, mixed with 54 g graphite, were compacted to cylinders with a diameter and length of 3 mm, respectively. The atmospheric humidity was less than 20%. The die fill was 7.5 mm. and the submersion depth was 5.0 mm.

### Example 4

679 g of Basolite™ C300, mixed with 21 g graphite, were compacted in a 6 mm cube tooling equipment. The atmospheric humidity was less than 15 %. The die fill was 11.2 mm and the submersion depth was 6.1 mm.

### Example 5

679 g of Basolite™ C300, mixed with 21 g graphite, were compacted in a 4 mm rounded cube tooling equipment with the radii of curvature of R1 = 1 mm and R2 = 0.5 mm. The atmospheric humidity was less than 25%. The die fill was 7.9 mm and the submersion depth was 5.2 mm.

### Example 6

679 g of Basolite™ C300, mixed with 21 g graphite, were compacted in a 6 mm rounded cube tooling equipment with the radii of curvature of R1 = 1.5 mm and R2 = 0.8 mm. The atmospheric humidity was less than 15%. The die fill was 11.6 mm and the submersion depth was 7.4 mm.

### Comparative example 3

570 g of Basolite™ A520, mixed with 30 g graphite, were compacted to cylinders with a diameter and length of 3 mm, respectively. The shapes were produced under atmospheric humidity. This material is less sensible to humidity compared to the others. The die fill was 14.2 mm and the submersion depth was 11.8 mm.

### Example 7

570 g of Basolite™ A520, mixed with 30 g graphite, were compacted in a 6 mm rounded cube tooling equipment with the radii of curvature of R1 = 1.5 mm and R2 = 0.8 mm. The shaped bodies were produced under atmospheric humidity. The die fill was 13.1 mm and the submersion depth was 9.3 mm.

Tamped densities or bulk densities of shaped body packings were determined using a jolting volumeter type STAV II from J. Engelsmann AG according to DIN ISO 787. A weighed amount of the respective sample was put into a 1000 mL or 100 mL scaled cylinder. After tapping the cylinder 3000 times, the resulting volume of the packing was determined and the density calculated by dividing sample weight by sample volume.

Individual densities of the shaped bodies were determined by weighing individual shaped bodies, measuring its diameter and heights with a sliding caliper and then dividing weight by volume of the shaped body. An arithmetic average over 10 randomly chosen shaped bodies was reported.

An isothermal total volumetric methane uptake was recorded by fully charging an autoclave of a known inner volume with the shaped bodies. In a pretreatment the shaped bodies were activated in vacuum at a temperature of 150°C for at least 10 hours. Subsequently, the weight of the filled autoclave was measured on a balance. Then, the autoclave was pressurized with methane to 50 bar at 21 °C and weighed again. The difference between the two gravimetric measurements, before and after pressurizing, respectively, was divided by the inner volume of the autoclave.

The results of the examples and comparative examples are summarized in tables 1, 2 and 3.

**Table 1: Results referring to shaped bodies made of Basolite™ Z377**

| Shape | Surface area of the packing [m²/mL] | Surface area of the shaped body [m²/g] | Tamped density of the packing [g/mL] | Resistance to pressure [N] | Individual density of the shaped body [g/mL] | External porosity/ void space of the packing (calculated) | Methane uptake at 50 bar [g/L] |
|---|---|---|---|---|---|---|---|
| Powder | 1089 | 5184 | 0.21 | | | | 70 |
| Comparative example 1 | 1184 | 3384 | 0.35 | 24 ± 5 | 0.56 | 0.38 | 70 |
| Example 1 | 1140 | 4224 | 0.27 | 155 ± 27 | 0.44 | 0.38 | 77 |
| Example 2 | 1261 | 3822 | 0.33 | 45 ± 5 | 0.49 | 0.33 | 76 |
| Example 3 | 1228 | 3837 | 0.32 | 184 ± 17 | 0.49 | 0.35 | 79 |

**Table 2: Results referring to shaped bodies made of Basolite™ C300**

| Shape | Surface area of the packing [m²/mL] | Surface area of the shaped body [m²/g] | Tamped density of the packing [g/mL] | Resistance to pressure [N] | Density of the shaped body [g/mL] | External porosity/ void space of the packing (calculated) | Methane uptake at 50 bar [g/L] |
|---|---|---|---|---|---|---|---|
| Powder | 1080 | 2000 | 0.54 | | | | 128 |
| Comparative example 2 | 855 | 1296 | 0.66 | 32 ± 6 | 1.05 | 0.37 | 99 |
| Example 4 | 840 | 1749 | 0.48 | 188 ± 20 | 0.79 | 0.39 | |
| Example 5 | 971 | 1645 | 0.59 | 53 ± 11 | 0.87 | 0.33 | 96 |
| Example 6 | 901 | 1639 | 0.55 | 144 ± 20 | 0.87 | 0.37 | 96 |

**Table 3: Results referring to shaped bodies made of Basolite™ A520**

| Shape | Surface area of the packing [m²/mL] | Surface area of the shaped body [m²/g] | Tamped density of the packing [g/mL] | Resistance to pressure [N] | Density of the shaped body [g/mL] | External porosity/ void space of the packing (calculated) | Methane uptake at 50 bar [g/L] |
|---|---|---|---|---|---|---|---|
| Powder | 422 | 1240 | 0.34 | | | | 56 |
| Comparative example 3 | 469 | 1172 | 0.40 | 50 ± 8 | 0.62 | 0.35 | 50 |
| Example 7 | 576 | 1200 | 0.48 | 71 ± 11 | 0.70 | 0.31 | 53 |

The resistance to pressure of all inventive shaped bodies (examples 1, 2, 3, 4, 5, 6 and 7) was superior to the resistance to pressure of the shaped bodies according to the state of the art (comparative examples 1, 2 and 3).

For each material the mass specific surface area of the individual shaped body according to the invention was higher than the mass specific surface area of the shaped bodies according the state of the art and simultaneously the resistance to pressure was increased, which could not be expected from the state of the art. The pressing procedure of the compaction of cubes was shown to be less defective for the inner surface of the porous material. In relation to the surface area of the powder of the studied materials, the mass specific surface area of the shaped body was less reduced in case of a cube form compared to the cylinders of the comparative examples.

Further, the volume specific surface area of the packing, calculated by multiplying the surface area of the shaped body by the tamped density of the packing, was increased by means of rounded edges. The volume specific surface area of the packing is higher for examples 2 and 3, where the shaped bodies comprise rounded edges, in comparison to example 1 with sharp edges. The same applies for examples 5 and 6 in comparison to example 4. Therefore, it was shown that rounded edges of the shaped bodies led to an increased volume specific surface area of the packing of the inventive shaped body and for a given volume, of for example a tank, a larger surface for adsorption purposes for example can be provided.

A direct comparison between sharp edges (examples 1 and 4) and rounded edges (examples 3 and 6) at a 6 mm cube showed a reduced void space of the packing the shaped bodies with rounded egdes from 0.38 to 0.35 and from 0.39 to 0.37, respectively. Further, the examples 2 and 3 applying cubes with rounded edges made from Basolite™ Z377 showed a reduced void space of 0.33 and 0.35, respectively, compared to the corresponding cylinder in comparative example 1 with 0.38. And the examples 7 applying cubes with rounded edges made from Basolite™ A520 showed a reduced void space of 0.31 compared to the corresponding cylinder in comparative example 3 with 0.35.

A slight increase with regard to a methane uptake at 50 bar was reported for the inventive shaped bodies made of Basolite™ Z377. The methane uptake at 50 bar was comparable for all tested shaped bodies made of Basolite™ C300 and Basolite™ A520 in the limits of measurement accuracy. In this context is has to be noted that it is known in literature that a correlation between the volume specific surface area and the methane uptake is not necessarily linear.

The examples and comparative examples showed that by changing the geometry of the shaped bodies from cylinders to cubes, higher surface areas can be preserved after pressing along with a higher crush strength. In addition, by application of rounded edges the packing behavior can be improved, which was expressed in the reduction of voids spaces in the packing.

Reference numerals
- 1: Cuboid shaped body
- 3: Lateral face
- 5: Sharp edge
- 7: Angle α
- 11: Cylindrical shaped body
- 13: Rounded girthed area
- 15: Shaped body
- 17: Rounded edge
- 18: Radius of curvature
- 19: Circular arc with a first radius of curvature
- 21: Circular arc with a second radius of curvature
- 22: Length
- 23: Corner
- 24: Reference line
- 25: First packing
- 27: Second packing
- 29: Third packing
- 31: Radial orientation
- 33: Fourth packing
- 35: Contact area
- 37: Notch
- 39: Width of notch

## Claims

1. A shaped body, wherein the shaped body (1, 15) is a solid body made of a porous material comprising metal-organic framework material and having a form of a polyhedron with six lateral faces (3), wherein a length (22) of one edge (5, 17) of the polyhedron differs from a length (22) of any other edge (5, 17) of the polyhedron by 10% or less and wherein all angles between two adjacent edges and adjacent lateral faces are between 85° and 95°.

2. The shaped body according to claim 1, wherein the shaped body (1, 15) has at least one rounded edge (17), the rounded edge (17) joining two adjacent lateral faces (3) of the polyhedron, and a circular arc (19, 21) drawn by a curvature of the at least one rounded edge (17) encloses with each of the two lateral faces (3) an angle α (7), which is between 85° and 95°.

3. The shaped body according to claim 1 or 2, wherein the metal-organic framework material comprises a metal component selected from the group consisting of magnesium, zirconium, aluminum, copper, zinc and mixtures thereof.

4. The shaped body according to any of claims 1 to 3, wherein the metal-organic framework material comprises at least one at least bidentate organic compound selected from the group consisting of fumaric acid, terephthalic acid, benzene tricarboxylate, 2-methylimidazole and benzene tribenzoate.

5. The shaped body according to any of claims 1 to 4, wherein the shaped body (1, 15) comprises at least 1 % by weight of a binder and/or lubricant, which are selected from the group consisting of graphite, stearic acid, magnesium stearate, copper, silicon carbide, expanded natural graphite, ascorbyl palmitate, polysaccharides, aluminium oxide and mixtures thereof.

6. The shaped body according to any of claims 2 to 5, wherein a radius of curvature (18) of the at least one rounded edge (17) is at least 0.1 mm and at most 10% of the length (22) of the at least one rounded edge (17).

7. The shaped body according to any of claims 2 to 6, wherein four edges (5, 17), having directions differing from each other by less than 10%, are rounded edges (17).

8. The shaped body according to any of claims 2 to 6, wherein all edges (5, 17) of the polyhedron are rounded edges (17).

9. The shaped body according to any of claims 2 to 8, wherein the radius of curvature (18) is equal for all rounded edges (17) of the polyhedron.

10. The shaped body according to any of claims 2 to 8, wherein at least two rounded edges (17) of the polyhedron have different radii of curvature (18).

11. The shaped body according to any of claims 1 to 10, wherein the length (22) of one edge (5, 17) is between 1 mm and 100 mm.

12. The shaped body according to any of claims 1 to 11, wherein the shaped body (1, 15) has a resistance to pressure between 2 N and 1000 N.

13. A packing comprising the shaped body according to any of claims 1 to 12.

14. The packing according to claim 13, wherein a radial orientation (31) of one shaped body (1, 15) in the packing (25, 29, 33) differs by less than 20° from the radial orientation (31) of any other shaped body (1, 15) in the packing (25, 29, 33).

15. Use of the shaped body according to any of the claims 1 to 12 for sorption of at least one liquid or gas, for storage of at least one liquid or gas, for separation, as catalyst, as support, as desiccant, as ion exchanger material, as molecular sieve, as material for chromatography, as material for a selective release and/or uptaking of molecules, as material for molecular recognition, as material for nanotubes and/or as material for nano-reactors.
